# EUROPEAN PATENT SPECIFICATION

(11) **EP 0 676 459 B1**
(45) Date of publication and mention of the grant of the patent: **29.08.2001**
(21) Application number: 94929694.1
(22) Date of filing: 28.09.1994
(51) Int. Cl.: C09K 5/04

(54) **WORKING MIXTURE FOR REFRIGERATION EQUIPMENT**
ARBEITSGEMISCH FÜR KÜHLVORRICHTUNGEN
MELANGE ACTIF POUR EQUIPEMENTS FRIGORIFIQUES

(30) Priority: 29.09.1993 RU 93046038
(43) Date of publication of application: 11.10.1995
(73) Proprietor: COOPERATIVE "ELEGAZ", Moscow 109429 (RU)
(72) Inventor: MAZURIN, Igor Mikhailovich, Moscow, 111141 (RU)
(74) Representative: Rambelli, Paolo
(86) International application number: RU9400224
(87) International publication number: WO9509213

(56) References cited:
- SU-A- 1 781 279
- US-A- 3 642 639
- US-A- 3 719 603

## Description

The invention relates to refrigerating equipment and can be employed in low-temperature, medium-temperature and high-temperature refrigerating systems, as well as in air-conditioners and heat pumps.

### Technology Level

There is known a working mixture for refrigerating systems which contains sulfur hexafluoride SF₆ and monochlorodifluoromethane CHClF₂ (USA Patent N 3642639, C 09 K 3/02, published in 1972). Cooling capability of this well-known mixture is higher than that of its individual components. The mixture can be applied with the greatest advantage in the field of low-temperature refrigerating systems in the range of boiling point T_{boil} from -25 to -40°C.

The drawback of the well-known mixture is that one of its constituents contains chlorine, which makes this mixture hazardous for the ozone layer. Ozone (O₃) is destroyed by chlorine (Cl) which is released from the fluorinechlorinecarbon compounds under the action of the hard solar radiation.

There is known a working mixture for refrigerating systems which contains, mas. %: octafluoropropane (R 218) 35-80 and octafluorocyclobutane (R C318) 20-65. (USSR Inventor's Certificate N 1781279, C 09 K 5/00). The mixture is chosen as a prototype. This well-known working mixture is suited to the modern requirements of providing for safety of the ozone layer.

The drawback of the well-known mixture for refrigerating systems is that the most effective from the standpoint of reducing power consumption range of concentrations of its constituents determines high boiling temperature of the mixture, which does not allow to use the mixture in household and industrial low-temperature and medium-temperature refrigerators. For the most effective concentration R 218/R C318 equal to 40/60, boiling temperature is -19°C, and for proportion 35/65 it is -22°C.

### Essence of the Invention

The purpose of the invention is to extend the temperature range in which a mixture based on octafluoropropane can be used, to reduce power consumed when using refrigerating equipment, and to provide for the safety of the ozone layer.

To achieve the above purpose there is proposed a working mixture for refrigerating systems which contains octafluoropropane (C₃F₈) and sulfur hexafluoride (SF₆).

The constituents' content in mass % is as follows:

| | |
|---|---|
| C₃F₈ | 36 - 99.9 |
| SF₆ | 0.1 - 64 |

Besides, the constituents' content in mass % is as follows

The distinction of the proposed mixture resides in its composition and proportion of the constituents.

Sulfur hexafluoride SF₆ possesses limitless solubility in octafluoropropane (C₃F₈), has rather low boiling temperature, exquisitely stable, nonflammable. The peculiarity of SF₆ from the standpoint of reducing the cycle power consumption is the low index of its adiabat (1.02 - 1.04). Not the least of the factors is relatively low cost of sulfur hexafluoride (at least half as much as the cost of R218 or RC318).

The proposed mixture can be used both in the form of azeotropic composition, in particular when the proportion of constituents C₃F₈ - SF₆ in mas. % is 4.5 : 95.5, and in the form of unazeotropic mixture, when the constituents' contents is beyond the azeotropic region.

The existence of azeotropic region is established in an experiment as follows from the data provided below.

The mixture of C₃F₈ and SF₆ taken in amount of 1 kg with a proportion of its constituents by mass 4/96 when subjected to slow evaporation retained its composition in a liquid phase at the liquid phase depletion down to 0.05 kg with accuracy of up to 0.1 mas.%.

Before it is charged into a refrigerating system, the mixture is prepared in an isolated cylinder - filling tank by the weight method with the control over the mixture composition.

The table presents calculated and experimental data obtained in the research.

| Composition mas.% | Boiling t° (C) at p=1 atm. | Critical t° (C) | Power consumption at condensation t=20°C, Wt |
|---|---|---|---|
| 0.3 SF₆ | - 37 | 72 | 127 |
| 99.7 C₃F₈ | | | |
| 4 SF₆ | - 38 | 72 | 102 |
| 96 C₃F₈ | | | |
| 60 SF₆ | - 45 | 55 | 142 |
| 40 C₃F₈ | | | |

As follows from the data of the above table, in the range of constituents' concentrations around 4 mas.% SF₆ power consumption is reduced. Incorporation of SF₆ into the mixture at the same time allows to extend the temperature range for employment of the working mixture to include low-temperature region. Besides, the proposed working mixture is ecologically clean (safe for the ozone layer), because the molecule of SF₆ does not contain Cl atoms, and the gas of sulfur hexafluoride is used in medicine as a medium which is safe for a man. Important features of the proposed working mixture are its high stability, non-flammability, non-explosiveness, corrosion indifference.

Boundary values of concentrations of the working mixture constituents are determined, on the one hand, by minimum SF₆ concentration in the mixture, at which the effect of reduction in power consumption is reliably retained (0.1 mas.%), and on the other hand - by the mixture critical temperature, which shall not be below + 55°C, i.e. condensation temperature accepted for medium-temperature and high-temperature compressors of refrigerating systems. An increase in the SF₆ concentration above 64 mas.% leads to a drop in the mixture critical temperature, which in its turn interferes with the cycle in a refrigerating system, operating under the normal ambient conditions, because in such conditions the excessive SF₆ concentration will prevent the mixture from condensation, and, therefore, cold will not be generated.

Thus, the proposed working mixture can find application in low-temperature, medium-temperature and high-temperature refrigerating systems, in air-conditioners and heat pumps.

And due to the above-mentioned features the proposed working mixture allows the change-over of the refrigerating equipment, currently based on the ozone layer damaging refrigerants (R-12, R-22, R-113, R-114 and so on) to the proposed mixture, and with such change-over it is not required to modify and amend designs of the serial refrigerators and air-conditioners, as well as to develop new oils, rubbers and structural materials.

## Claims

1. Working mixture for refrigerating systems, which contains octafluoropropane (C₃F₈) and sulfur hexafluoride (SF₆).

2. Working mixture for refrigerating systems according to Claim 1, distinguished by the following components' contents in the mixture in mas.%:
| | |
|---|---|
| Octafluoropropane | 36 - 99.9 |
| Sulfur hexafluoride | 0.1 - 64 |

3. Working mixture for refrigerating systems according to Claim 1 distinguished by the following components' content in mas.%:
| | |
|---|---|
| Octafluoropropane | 95 - 97 |
| Sulfur hexafluoride | 3 - 5 |

## Patentansprüche

1. Arbeitsgemisch für Kühlsysteme, das Octafluorpropan (C₃F₈) und Schwefelhexafluorid (SF₆) enthält.

2. Arbeitsgemisch für Kühlsysteme nach Anspruch 1, gekennzeichnet durch die nachstehenden Komponentengehalte im Gemisch in Masse-%:
| | |
|---|---|
| Octafluorpropan | 36 - 99,9 |
| Schwefelhexafluorid | 0,1 - 64 |

3. Arbeitsgemisch für Kühlsysteme nach Anspruch 1, gekennzeichnet durch die nachstehenden Komponentengehalte in Masse-%:
| | |
|---|---|
| Octafluorpropan | 95 - 97 |
| Schwefelhexafluorid | 3 - 5 |

## Revendications

1. Mélange de travail pour systèmes réfrigérants, qui contient de l'octafluoropropane (C₃F₈) et de l'hexafluorure de soufre (SF₆).

2. Mélange de travail pour systèmes réfrigérants selon la revendication 1, distingué par les teneurs suivantes en composés dans le mélange, en % en masse :
| | |
|---|---|
| Octafluoropropane | 36-99,9 |
| Hexafluorure de soufre | 0,1-64 |

3. Mélange de travail pour systèmes réfrigérants selon la revendication 1, distingué par les teneurs suivantes en composés dans le mélange, en % en masse :
| | |
|---|---|
| Octafluoropropane | 95-97 |
| Hexafluorure de soufre | 3-5 |
